# EUROPEAN PATENT APPLICATION

(11) **EP 1 833 218 A1**
(43) Date of publication of application: **12.09.2007**
(21) Application number: 06251198.5
(22) Date of filing: 07.03.2006
(51) Int. Cl.: H04L 29/06

(54) **Apparatus for and a method of delivering a message to a user**

(71) Applicant: BRITISH TELECOMMUNICATIONS public limited company, London EC1A 7AJ (GB)
(72) Inventor: The designation of the inventor has not yet been filed
(74) Representative: Roberts, Simon Christopher

(57) **Abstract**

Apparatus for delivering a message to a user comprising means for communicating with service providers and means for communicating with device agents operating on respective user devices, wherein the service provider communicating means is configured to receive a request to communicate with a specified user and to selectively output a message for the user to said device agent communicating means and wherein the device agent communicating means is configured to maintain a list of connected device agents,to receive information, from one of said connected device agents, for identifying a preferred device agent for sending a message to the user, to store information for identifying the preferred device agent and to transmit the message to the preferred device agent.

## Description

The present invention relates to apparatus for and a method of delivering a message to a user.

A growing number of services can now be delivered to an increasing variety of user devices via a rising number of different networks. This proliferation of services, devices and networks can present the user with problems, such as the need to manage an ever-growing number of accounts, devices and device configurations. Furthermore, services, devices and networks are likely to become more specialized which can lead to inconsistencies in the ways services are accessed and devices are operated. It can also introduce inflexibility in the manner in which services are delivered. Additionally, service providers face problems when delivering services to users since users may only be sporadically available. Moreover, users can be difficult to identify and authenticate and can also be unpredictable, unreliable and inconsistent. These problems tend to hinder successful and seamless provision of services.

The present invention seeks to help address these problems.

According to the present invention there is provided apparatus for delivering a message to a user, the apparatus comprising means for communicating with service providers and means for communicating with device agents operating on respective user devices, wherein the service provider communicating means is configured to receive a request to communicate with a specified user and to selectively output a message for the user to the device agent communicating means and wherein the device agent communicating means is configured to maintain a list of device agents connected thereto, to receive information, from one of said connected device agents, for identifying a preferred device agent for sending a message to the user, to store information for identifying the preferred device agent and to transmit the message to the preferred device agent.

Thus, the apparatus can provide a point of access to the user for service providers which the user can configure from any device agent so that messages are sent to a preferred device.

The information may identify the one of said connected device agents as the preferred device agent. Thus, if the user can no longer access the preferred device for receiving notifications, then they can promote the device they are currently using. Alternatively, the information may identify another one of said connected device agents as the preferred device agent. Thus, if the user expects that they will no longer be able to use the device they are currently using, but can access another device, then they can promote the other device and thereby minimise disruption.

The apparatus may be configured to receive an instruction from a first connected device agent to disconnect a second connected device agent and to disconnect said second connected device agent from the device agent communicating means. The apparatus may be configured to receive information from a first connected device agent identifying a second connected device agent to be disconnected from the device agent communicating means. The apparatus may be configured to send an instruction to the second connected device agent to disconnect from the device agent communicating means.

Thus, if the user moves away from a device, such as a desktop PC, then they can remotely log off using another device, such as their mobile telephone handset.

The first and second connected device agents may be the same.

The device agent communicating means may be configured to determine a type of the message and, in dependence upon the message type, to transmit the message to a device agent other than the preferred device agent. The device agent communicating means may be configured, in dependence upon the message type, to transmit the message to all connected device agents.

Thus, other devices or all of the devices can receive certain types of messages.

The message may include service data, such as content or a link to content, or service-related data, such as an alert or information about a service. The message may be in XML format.

The device agent communicating means may comprise means for co-operating with a device agent to establish a connection. The device agent communicating means may comprise at least two means for co-operating with respective device agents via respective types of user device connectivity. This can help the apparatus to reach the user since one type of connectivity may be available if another type of connectivity is not.

The apparatus may be configured to prepare the message having a structured format and including a device-readable instruction specifying a data format of data to be input into the device by the user. The message may be in a mark-up language and the device-readable instruction may comprise mark-up tags for identifying an instruction and an element and/or attribute for identifying a data format. The device-readable instruction may comprise a user-selectable response for providing, for example, so called "pull down" options.

According to a second aspect of the present invention there is provided a device for receiving a message from a message delivery apparatus, the device comprising a device agent for communicating with the message delivery apparatus, the device agent configured to receive, from the message delivery system, a list of device agents which are connected to the message delivery system and associated with a user, the device agent further configured to receive information, from the user, for identifying a preferred device agent for receiving messages and to send information for identifying the preferred device agent to the message delivery apparatus.

Thus, the user can select which device is used as a point of access for receiving messages from the message delivery system.

The information may identify the one of said connected device agents as the preferred device agent. Alternatively, the information may identify another of the connected device agents as the preferred device agent.

The device may be configured to send information, to the message delivery apparatus, for identifying a device agent to be disconnected.

Thus, if the user moves away from one device, such as a desktop PC, then they can remotely log off using another device, such as their mobile telephone handset.

The information may identify the one of said connected device agents as the device agent to be disconnected. Alternatively, the information may identify another of the connected device agents as the device agent to be disconnected.

The device may comprise indicating means and the device may be configured to indicate to the user via said indicating means whether the device agent is connected to the message delivery system, when the device is connected. The device may be configured to indicate to the user that the device agent is the preferred device agent for receiving messages from the message delivery system, when the device is the preferred device. The device may be configured to indicate to the user that another device agent is the preferred device agent for receiving messages from the message delivery system, when another device is preferred. The indicating means may be a display.

The device may comprise input means and the device may be configured to receive an instruction via said input means to select one of the device agents as the preferred device agent and to send information for identifying the preferred device to the message delivery apparatus. The device may comprise input means and the device configured to receive an instruction via said input means to select one of the device agents to be disconnected and to send information for identifying the device to the message delivery apparatus. The device may be configured to provide a graphical user interface, to display the list of the device agents via said graphical user interface and to allow said user to select one of the device agents using said input means

According to third aspect of the present invention there is provided a system comprising a message delivery apparatus, at least two devices and at least one service provider, said at least one service provider configured to transmit a request to the message delivery apparatus, the message delivery apparatus configured to determine whether to send a message to the user, to receive information from a device agent operating on a device for identifying a preferred device agent, to store information for identifying the preferred device agent and to transmit the message to the preferred device agent.

According to a fourth aspect of the present invention there is provided apparatus for delivering a message to a user, the apparatus comprising a module for communicating with service providers and a module for communicating with device agents operating on respective user devices, wherein the service provider module is configured to receive a request to communicate with a specified user and to selectively output a message for the user to said device agent communicating module and wherein the device agent communicating module is configured to maintain a list of device agents connected thereto, to receive information from one of said connected device agents for identifying a preferred device agents, to store information for identifying the preferred device agent and to transmit the message to the preferred device agent.

According to a fifth aspect of the present invention there is provided a method of delivering a message to a user, the method comprising maintaining a list of device agents connected to a message delivery apparatus, receiving information, from one of said connected device agents, for identifying a preferred device agent, storing said information for identifying the preferred device agent, receiving a request to communicate with a specified user, selectively outputting, in response to receiving the request, a message for the user and transmitting said message to the preferred device agent.

According to a sixth aspect of the present invention there is provided a method of operating a device for receiving a message from a message delivery apparatus, the method comprising receiving, from the message delivery system, a list of device agents connected to the message delivery system and which are associated with a user, receiving information, from the user, for identifying a preferred device agent for receiving messages, and transmitting information for identifying the preferred device agent to the message delivery apparatus.

According to a seventh aspect of the present invention there is a computer program, which when executed by data processing apparatus, causes the apparatus to perform the method.

According to an eighth aspect of the present invention there is a computer readable medium storing the computer program.

Embodiments of the present invention will now be described, by way of example with reference to the accompanying drawings in which:
Figure 1 is a schematic block diagram of apparatus for delivering a message to a user from any one of plurality of service providers via any one of a plurality of user devices and *vice versa* in accordance with the present invention;
Figure 2 is a schematic block diagram of a register;
Figure 3 is a schematic block diagram of a module for handling requests to communicate with a user, together with excluded list and log databases;
Figure 4 is a schematic block diagram of the apparatus shown in Figure 1;
Figure 5 is a schematic block diagram of a user device shown in Figure 1;
Figure 6 is a process flow diagram of a method of connecting to a service agency;
Figure 7 is a process flow diagram of a method of maintaining a connection with a service agency;
Figure 8 is a process flow diagram of a method of disconnecting from a service agency;
Figure 9 is a process flow diagram of a method of determining which device agent to use;
Figure 10 is a process flow diagram of a method of delivering a message to a user in accordance with the present invention;
Figures 11a and 11b illustrate, respectively, notification of receipt of a first example of message and display of the message sent using the process shown in Figure 10;
Figure 12 is a process flow diagram of a method of receiving and displaying a message and sending a response;
Figures 13a, 13b and 13c illustrate, respectively, notification of receipt of a second example of message, display of the message and preparation of a response using the process shown in Figure 10 and employing the process shown in Figure 12;
Figure 14 is a process flow diagram of a method of sending a payment authorisation request message to a user and receiving a payment authorisation message in accordance with the present invention;
Figures 15a and 15b illustrate, respectively, notification of receipt of the payment authorisation request message and display of the message sent using the process shown in Figure 14;
Figure 16 is a process flow diagram of a method of sending a lookup request message to a user and receiving a lookup authorisation message in accordance with the present invention;
Figures 17a to 17e illustrate notification of receipt of the lookup authorisation request message, display of the message and preparation of the authorisation response using the process shown in Figure 16;
Figure 18 is a schematic diagram showing a message carrying an operation;
Figure 19 illustrates notification of receipt of a message carrying an operation;
Figure 20 is a process flow diagram of a method of processing a message carrying an operation;
Figure 21 illustrates selection and use of an operation;
Figure 22 is a flow diagram of a method of connecting plural device agents to a service agency;
Figure 23 is a schematic block diagram of a register holding information about a preferred device for receiving notifications;
Figure 24 illustrates a portion of a screen showing a device agent icon;
Figure 25 illustrates a portion of a screen showing a preferred device agent icon;
Figure 26 illustrates a user promoting another device to the status of preferred device for receiving notifications;
Figure 27 is a flow diagram of a method of promoting a device to the status of preferred device for receiving notifications;
Figure 28 illustrates a portion of a screen showing a non-preferred device agent icon;
Figure 29 illustrates a user promoting currently-used device to the status of preferred device for receiving notifications;
Figure 30 illustrates a user logging off a device;
Figure 31 is a process flow diagram of a method of logging off a device; and
Figure 32 illustrates a user promoting another device to the status of preferred device for receiving notifications using a mobile telephone handset.

### System

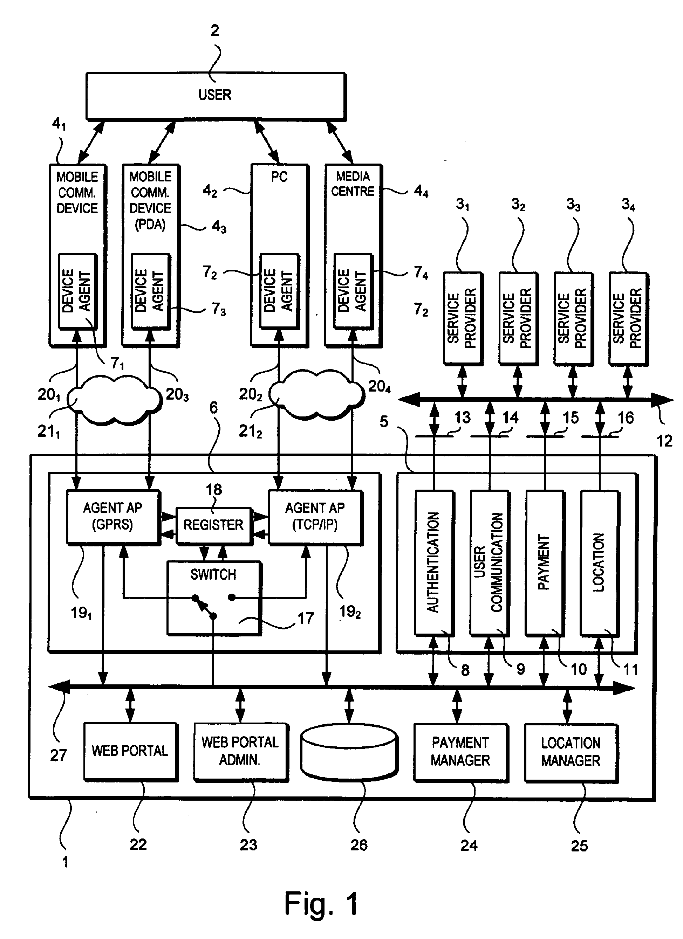

Referring to Figure 1, apparatus 1 for delivering a message to a user 2 from any of plurality of service providers 3₁, 3₂, 3₃, 3₄ via any of a plurality of user devices 4₁, 4₂, 4₃, 4₄ in accordance with the present invention is shown. The apparatus 1 provides a point of access for the service providers 3₁, 3₂, 3₃, 3₄ to deliver and receive messages to and from the user 2 and is hereinafter referred to as a "service agency". The service agency 1 supports delivery of service or content by providing "service elements", for example identifying and authenticating users and providing a channel for users to pay for these services and content. For clarity, only one user 2 is shown in Figure 1 and in this specification the system is described with reference to only one user 1. However, the service agency 1 can deliver messages to any of a plurality of users.

The service agency 1 includes a gateway 5 for communicating with service providers 3₁, 3₂, 3₃, 3₄ and a module 6 for communicating with device agents 7₁, 7₂ operating on respective user devices 4₁, 4₂, 4₃, 4₄.

The service provider gateway 5 includes a module 8 for receiving and handling requests to authenticate the user 2, a module 9 for receiving and handling requests to communicate with the user 2, a module 10 for receiving and handling requests for settling payment made by the user 2 and a module 11 for receiving and handling requests to locate the user 2. The user communication module 9 can receive requests from service providers 3₁, 3₂, 3₃, 3₄ and from the other modules 8, 10, 11.

The service providers 3₁, 3₂, 3₃, 3₄ are connectable to the modules 8, 9, 10, 11 by a network 12, such as the Internet, via respective application programming interfaces 13, 14, 15, 16. The service providers 3₁, 3₂, 3₃, 3₄ each include a server (not shown) which includes, among other things, processing means (not shown) and interfacing means (not shown).

The device agent communicating module 6 includes a switch 17 for routing outgoing communication data to a selected device agent 7₁, 7₂, a register 18 and device agent access points 19₁, 19₂. Two device agent access points 19₁, 19₂ are illustrated. However, additional access points (not shown) may be provided to support further network types or transport requirements.

The switch 17 is configured to refer to the register 18 to identify which device agent 7₁, 7₂ to use for each user 2 at any given moment.

The device agent access points 19₁, 19₂ co-operate with the device agents 7₁, 7₂ to establish connections 20₁, 20₂, 20₃, 20₄ via networks 21₁, 21₂. The device agent access points 19₁, 19₂ authenticate the device agents 7₁, 7₂. Authentication based on user name and password or PIN or stronger forms of authentication based on V.509 certificates or biometrics, such as fingerprint or iris scans, may be used. The device agents 7₁, 7₂ identify the user and their availability and can also identify the type of device on which it operates and the capabilities of device, such as bandwidth, memory availability, processing power and forms of output.

The device agent access points 19₁, 19₂ are provided for each type of user device connectivity, in this example general packet radio service (GPRS) network and an IP network. Device agent access points for different or additional types of network connectivity may be provided, such as for universal mobile telephone system (UMTS) network, wireless local area network based on IEEE 802.11x standards, such as so-called "WiFi", wireless metropolitan area network based on IEEE 802.16 standards, sometimes referred to as "WiMax" and other wireless and wired device connectivity. The access points 19₁, 19₂ need not necessarily form part of network infrastructure and/or provide a network interface for a given type of connectivity. Instead, the access points 19₁, 19₂ may be connected via a network (not shown), such as the Internet, to the appropriate network infrastructure (not shown), such as a GPRS network, or to a remote network interface (not shown), such as a wireless LAN access point or network adapter, cable modem.

Messages for the user may be transmitted in the form of extensible Mark-up Language (XML) documents. The documents can be validated using a Document Type Definition (DTD) file, such as:

| | | | |
|---|---|---|---|
| <!ELEMENT event (response*)> | | | |
| <!ATTLIST event | | | |
| | eventID | CDATA | #REQUIRED |
| | serviceProviderName | CDATA | #REQUIRED |
| | serviceName | CDATA | #REQUIRED |
| | message | CDATA | #REQUIRED |
| > | | | |
| <!ELEMENT response (#PCDATA)> | | | |
| <!ATTLIST response | | | |
| | value | CDATA | #REQUIRED |
| > | | | |

Messages can thus specify that a service (serviceName), run by a service provider 3₁, 3₂, 3₃, 3₄ (serviceProviderName), wishes to convey a message (message) to the user 2. If the appropriate fields in the XML document are present, then the user may respond with any one of the given valid responses (response). Extensions can be made to specify valid additions to the allowed responses.

Where events are generated by a service provider 3₁, 3₂, 3₃, 3₄, the serviceProviderName and serviceName fields can be set accordingly. Where events are generated by the service agency 1, the same fields can be used accordingly.

Attachments, such as style-sheets and graphics, can be used to provide a more attractive presentation, for example, which is rich in content.

As will be described in more detail later, the message may be in the form of a text message. However, the message may include content, such as a jpeg file, or a link to content, such as a universal resource locator (URL).

Other structured message formats can be used instead of XML, such as hypertext markup language (HTML) and XForms.

Referring still to Figure 1, the service agency 1 also includes a web portal 22, a web portal administrator module 23, a payment manager 24, a location manager 25 and a database 26 connected via a connection layer 27.

The web portal 22 allows a user 2 to log in to the service agency 1 and configure settings, such as granting permission to the service agency 1 to handle certain functions, such as payment, view activity, such as payment activity, and set privacy and security policies.

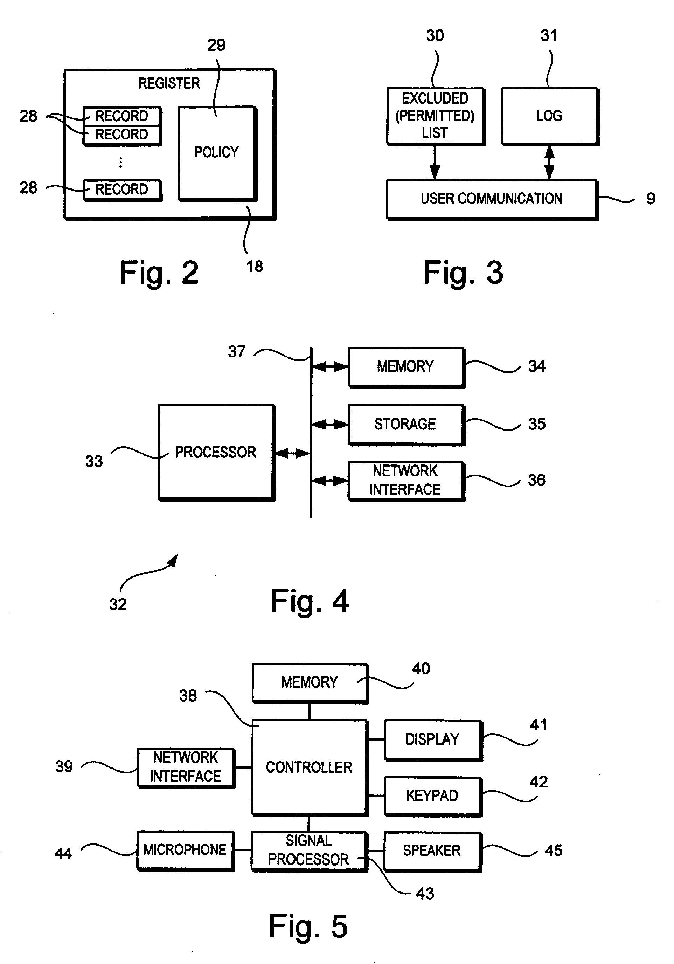

Referring to Figure 2, the register 18 holds records 28 of all connected device agents 7₁,7₂ for the user 2. Each record 28 includes the identity of the user 2, the identity of a device agent access point 19₁, 19₂ and information about user availability. The register 18 also holds a policy 29 for determining which device agent 7₁, 7₂ should be used.

Referring to Figure 3, the user communication module 9 is provided with a list 30 of excluded and/or permitted service providers and/or message types and a log 31 of incoming and outgoing messages. The excluded (permitted) list 30 and log 31 may be stored in database 26 (Figure 1).

Referring to Figure 4, the service agency 1 is run on a server 32 or other computer. The server 32 has a processor 33, memory 34, storage 35 and at least one network interface 36, connected by a system bus 37. The server 32 may include other elements, such as caches (not shown), and peripherals, such as displays and keyboards (not shown), but these are omitted for clarity. The service agency 1 may be implemented as a distributed system, such as a cluster of servers.

Referring again to Figure, 1 first and second user devices 4₁, 4₂ are a mobile communications device 4₁, in the form of a second-generation mobile telephone handset, and a personal computer (PC) 4₂ respectively. A third device 4₃ is another mobile communications device, in the form of a personal digital assistant, and a fourth device 4₄ is a media centre, i.e. a powerful computing device for handling video and audio content, which may have broadband internet connectivity, for example via a cable modem (not shown). Different or additional user devices (not shown) may be used, such as a third-generation mobile telephone handset, a smart phone, a set-top box or other computing device capable of being connected to a network. Furthermore, more than one user device of the same type may be provided. For example, the user may have access to more than one PC. The mobile communications device 4₁ is provided with GPRS connectivity to a mobile telephone network and the personal computer 4₂ is provided with wired connectivity to the Internet.

User devices of the same type may have different network connectivity. Even if user devices have the same network connectivity, then the network connectivity or the network may have different operating capabilities, such as different bandwidth, and/or different pricing structure. Furthermore, any network (or network segment) may be provided by different network providers. Thus, even though the user can be reached by at least two user devices of similar capability, it may be preferable to contact the user via a specific user device.

Referring to Figure 5, the mobile communications device 4₁ is shown in more detail. The device 4₁ includes a controller 38, a network interface 39, memory 40, a display 41, keypad 42, a signal processor 43, a microphone 44 and a speaker 45.

It will be appreciated that user devices 4₁, 4₂ need not be mobile and can have a different configuration.

The device agents 7₁, 7₂ (Figure 1) can be pre-loaded on a user device 4₁, 4₂. Alternatively, the user may download the device agent 7₁, 7₂ as-and-when required. This can be convenient if the user accesses a user device to which they would not normally have access, such as a PC in an Internet café.

### Operation

Referring again to Figure 1, the service agency 1 and device agents 7₁, 7₂ cooperate to allow the user 2 to be incorporated more efficiently and effectively as part of a service delivery system. The service agency 1 and device agents 7₁, 7₂ can improve delivery of service to the user by providing a set of re-useable user-oriented service functions.

The service agency 1 can provide non-real-time functions, while the device agents 7₁, 7₂ can provide the real-time functions and real-time user interaction support. The device agents 7₁, 7₂ may be present in different forms on each user device 4₁, 4₂ and the service agency 1 determines which device agent 7₁, 7₂ instances are available and preferable for performing different functions.

For example, if the user 2 is carrying a mobile communications device 4₁ and accessing a powerful desktop personal computer 4₂, then the service agency 1 can take advantage of the capability, performance and usability of the personal computer 4₂ and route services or other service-related communication to the device agent 7₂ running on the personal computer 4₂. However, if the user 2 logs off the personal computer 4₂, then the service agency 1 can employ the device agent 7₁ on the mobile communications device 4₁ and route services or service-related communication to the device agent 7₁. Even if the mobile communications device 4₁ cannot support a desired operation, the user 2 can still be notified of events and execution options, such as delivery of content, for example a copy of "Monsters Inc." to the user's home media centre (not shown).

Thus, the user can be integrated into the system more effectively and the service agency 1 can help to optimise service delivery and provide service-related messaging over any network and device.

When the user device 4₁, 4₂ is connected to a corresponding network 21₁, 21₂, each device agent 7₁, 7₂ registers with the service agency 1. Preferably, the service agency 1 authenticates the device agent 7₁, 7₂.

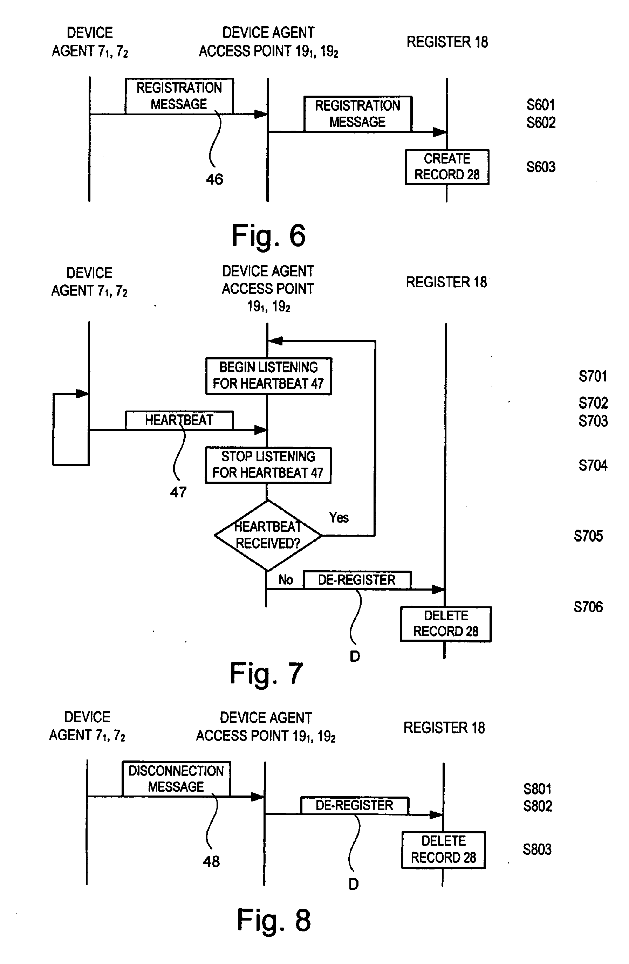

Referring to Figure 6, each device agent 7₁, 7₂ sends a registration message 46 to the service agency 1 (step S601). For example, the registration message 46 may include XML data in the following form:

```
   <?xml version=\"1.0\"?>
   <register>
   <version>J2SEv1.0</version>
   <userID>sa:mary.delaney@bt.com</userID>
   </register>
```

The registration message 46 is sent to an access point 19₁, 19₂ according to device connectivity. The access point 19₁, 19₂ may be specified by the device agent 7₁, 7₂, for example using an IP address or telephone number. Alternatively, the network 21₁, 21₂ may route the registration message to a specific access point 19₁, 19₂.

Once the registration message 46 has been received by an access point 19₁, 19₂, it is forwarded to the register 18 (step S602). The register 18 creates a record 28 including the user identity (userID) and the access point 19₁, 19₂ and may include data describing the device agent 7₁, 7₂, connection session and device capabilities. (step S603). The register 18 may also search for other entries for the same user and may update the routing policy 29 (Figure 2).

Referring to Figure 7, each device agent 7₁, 7₂ connected to the service agency 1 sends a confirmation message 47 to the service agency 1 to maintain the connection. The confirmation message 47 is hereinafter referred to as a "heartbeat" and can take the following form:

```
   <?xml version=\"1.0\"?><heartbeat/>
```

The access point 19₁, 19₂ begins listening for heartbeats 47 (step S701). The device agent 7₁, 7₂, sends a heartbeat 47, preferably periodically, for example at an interval between 1 and 100 seconds (step S702). The access point 19₁, 19₂ determines whether the heartbeat 47 has been received within a given time window (steps S704 & S705). If the heartbeat 47 (or a predefined number of consecutive messages) is (are) not received as expected, then the access point 19₁, 19₂ sends an instruction D to the register 18 to deregister the device agent 7₁, 7₂ (step S705). The register 18 then removes the record 28 (step S706). A disconnection message (not shown) may be transmitted to the network 21₁, 21₂ for delivery to the device agent 7₁, 7₂. If the heartbeat 47 is received, then the access point 19₁, 19₂ continues listening (step S701).

Referring to Figure 8, each connected device agent 7₁, 7₂ can notify the service agency 1 that it wishes to disconnect itself from the service agency 1. The device agent 7₁, 7₂ sends a disconnection message 48 to the service agency 1 (step S801). For example, the disconnection message 48 may include XML data in the following form:

```
   <?xml version=\"1.0\"?><bye/>
```

The access point 19₁, 19₂ receives the disconnection message 49 and sends an instruction D to the to the register 18 to deregister the device agent 7₁, 7₂ (step S802). The register 18 removes the record 28 (step S803).

As explained earlier, the resister 18 maintains a list of records 28 of which device agents 7₁, 7₂ are connected. The register 18 also stores a routing policy 29 (Figure 2) for determining which device agent 7₁, 7₂ to use.

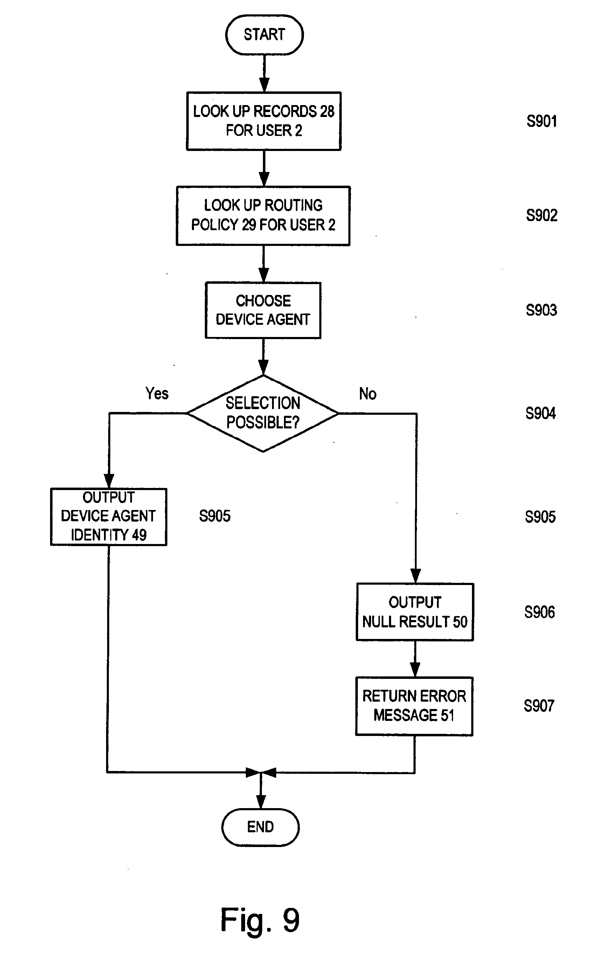

Referring to Figure 9, the register 18 may be called upon to provide information to the switch 17 (Figure 1) for routing a service or service-related communication to the user 2. The register 18 looks for records 28 related to the user 2 (step S901) and looks up the routing policy 29 (Figure 2) (step 902). Dependent on which device agent 7₁, 7₂ are connected and the routing policy 29 (Figure 2), the register 18 chooses a device agent 7₁, 7₂ (step S903). If a suitable device agent 7₁, 7₂ is available, then the register 18 outputs the identity 49 of a device agent 7₁, 7₂ and/or an access point 19₁, 19₂ (step S904). If no device agents 7₁, 7₂ are connected or if device agents 7₁, 7₂ are connected but do not conform with the routing policy 29 (Figure 2), then the register 18 outputs a null result 50 (step S906). Optionally, an error message 51 may be returned for replying to the sender, for example to the service provider 3₁, 3₂, 3₃, 3₄.

The policy 29 may include instructions as to how to deal with a message which cannot be delivered. For example, the register 18 may keep a record (not shown) of previous messages and responses or information, such as statistics, regarding previous messages and responses. The register 18 can deduce a rule from previous messages and responses. Additionally or alternatively, the user may set defaults which include forwarding rules. Thus, if a message is received which cannot be delivered, then the register 18 may respond on behalf of the user 2 based on predefined rules.

As explained earlier, the service agency 1 can be used to forward service or service-related data to the user 2. For example, a bank may send a message to the user 2 to notify the user 2 that their salary has cleared. An on-line auction house may send a message to the user 2 to notify them that they have been outbid and to ask whether they wish to raise their bid. The service agency 1 itself can send a message to the user 2 to notify them that the service agency has received a request to settle a payment or to release information about the location of the user. These examples will now be described in more detail.

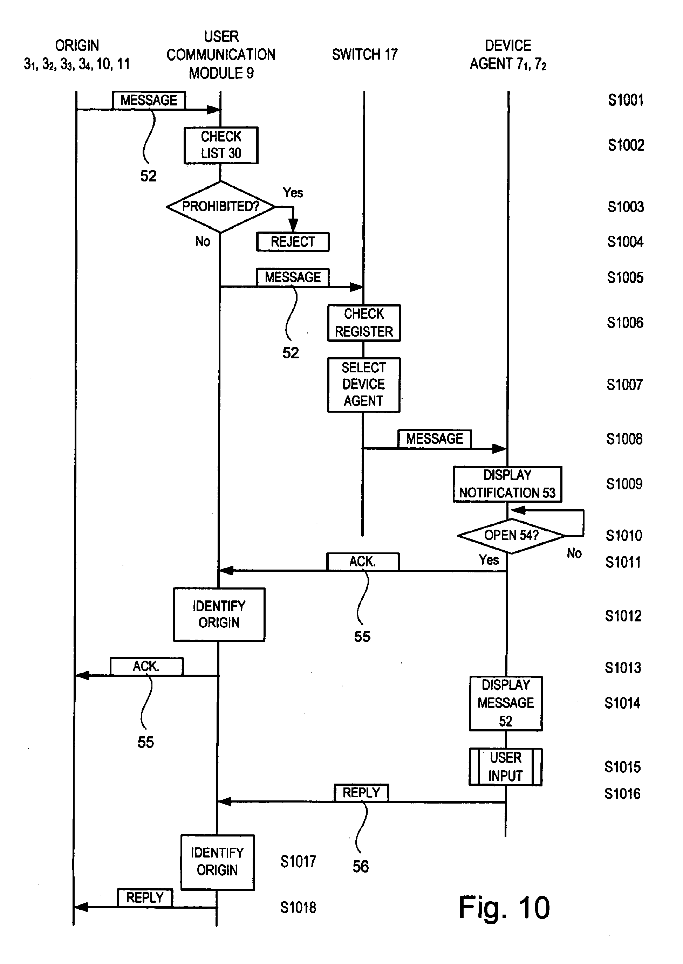

Referring to Figure 10, a first service provider 3₁, which in this case is a bank, transmits a message 52 to the service agency 1, requesting communication with the user 2 to notify the user 2 that their salary has cleared (step S1001). The message 52 can be in any predetermined format and specifies the identity of the user 2, a message and, optionally, valid response definitions. Preferably, web services are used to send the message and the message is in XML format, in a form ready to be forwarded to a device agent 7₁. However, other protocols can be used, such as Java Remote Method Invocation (RMI), and the message need not be in XML. If the message is not in XML, then the message is reformat, for example, by extracting data from pre-specified fields and placing the data into fields in an XML document.

The user communication module 9 checks the list 31 (Figure 3) to determine whether the service provider 3₁ or the message 52 is prohibited or allowed (step S1002). If the service provider 3₁ or the message 52 is prohibited, then the message 52 is rejected (step S1003). A rejection message (not shown) may be returned.

If necessary, the message 52 can be translated or reformatted and the message 52 is forwarded to switch 17 (step S1004). The message 52 is time stamped and the service provider can be identified. For example, the message 52 can take the following form:

```
   <?xml version=\"1.0\"?>
   <interaction>
   <reference>1234567</reference>
   <originator>NatWest</originator>
   <message> Your salary has cleared. Balance on 'Current Account'
   is £1234.56</message>
   </interaction>
```

The message 52 is received by the switch 17, which checks the register 18 (step S1005) and receives the identity of the access point 19₁, 19₂ to which the message 52 should be forwarded (step S1006). The message 52 is forwarded, via the appropriate access point 19₁, to the device agent 7₁ (step S1007) on one of the devices 4₁, 4₂. In this example, the device 4₁ is the mobile communications device.

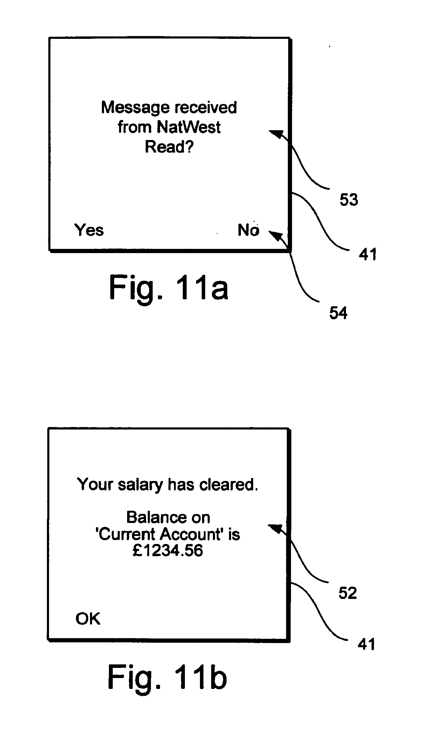

Referring also to Figure 11a, a notification message 53 is presented by the device agent 7₁ on the display 12 of the user device 4₁ for notifying the user 2 of receipt of the message 52 (step S1008). The notification message 53 offers options 54 for reading the message 52, such as "Yes" and "No", which can be selected using soft keys (not shown) of keypad 42 (Figure 5).

The notification message 53 can take different forms depending upon the type of user device. For example, if the user device is a PC, then the notification message can take the form of an icon in a notification area (sometimes referred to as a "system tray") or a pop-up dialogue box.

If the user enters an instruction to display the message 52, for example by pressing the "Yes" soft-key of the keypad 43 (Figure 5) (step S1010), then the device agent 7₁ sends an acknowledgement message 55 to the service agency 1, which is transmitted via the access point 19₁ to the communications module 9 (step S1011). For example, the acknowledgement message 55 can take the form:

```
   <?xml version=\"1.0\"?>
   <interactionAck>
   <reference>1234567</reference>
   </interactionAck>
```

The user communication module 9 can look up the reference number in log 31 (Figure 3) and identify the origin, in this case the service provider (step S1012). The user communication module 9 can then forward the acknowledgement to the service provider 3₁ (step S1013).

Referring also to Figure 11b, if the user enters an instruction to display the message 52 at step S1010, then the device agent 7₁ presents the message 54 to the user (step S1014).

In the example just described, the device agent 7₁ returns an acknowledgement message 55. However, the device agent 7₁ need not do so. Notwithstanding this, the method may include further steps to allow the user to send a reply 56 to a message, as will now be described in more detail.

A second service provider 3₂, which in this case is an on-line auction service provider, transmits a message 52 to the service agency 1, in this example, requesting to notify the user 2 that their bid has been outbid and inviting them to raise their bid.

Steps S1001 to S1014 are carried out substantially as described earlier. However, the message 52 is modified and can take the following form:

```
   <?xml version=\"1.0\"?>
   <interaction>
   <reference>57465875</reference>
   <originator>eBay</originator>
   <message>You have been outbid [Item#4503830952, 'Monsters, Inc.
    (DVD 2002)', current price GBP 3.2]. Do you want to increase
   your bid?</message>
   <response id="1">No</response>
   <response id="2">Yes - to GBP {da:intext name='Amount'} (min
   3.4)</response>
   </interaction>
```

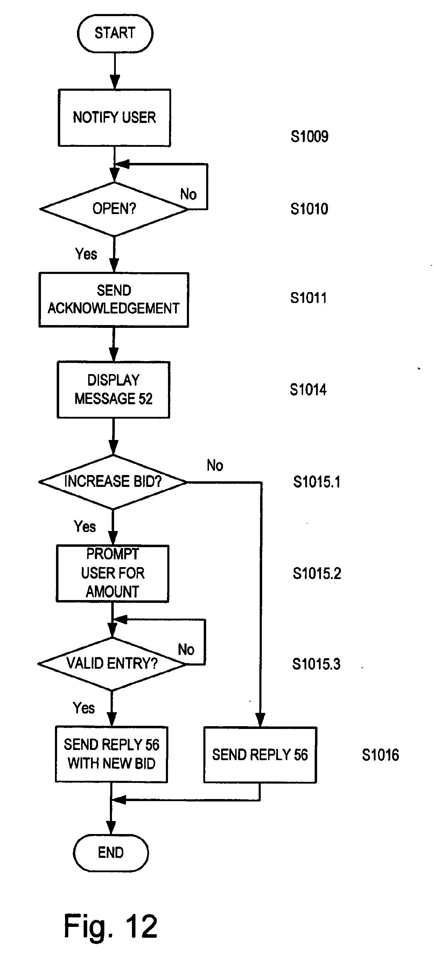

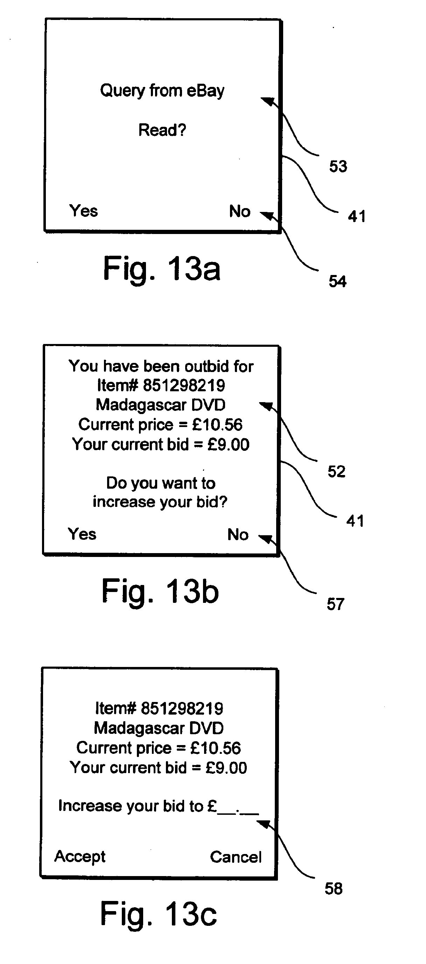

Referring to Figures 12 and 13a, a notification message 53 is presented by the device agent 7₁ on the display 12 of the user device 4₁, as described earlier (step S1009). The notification message 53 offers options 54 for reading the message 52.

If the user enters an instruction to display the message 52 (step S1010), then the device agent 7₁ sends an acknowledgement message 55 (step S1011). In this case, the acknowledgement message 55 can take the form:

```
   <?xml version=\"1.0\"?>
   <interactionAck>
   <reference>57465875</reference>
   </interactionAck>
```

Referring also to Figure 13b, if the user enters an instruction to display the message 54 at step S1009, then the device agent 7₁ presents the message 52 to the user (step S1014). Unlike the previous example of the message 52, the message 52 offers options 57 for user input, in other words, for responding to the message 52.

In this example, the device agent 7₁ offers the user 2 the options "Yes" and "No" to the question "Do you want to increase your bid?".

Referring to Figure 13c, if the user selects the option "Yes", i.e. to increase the bid, then a prompt 58 is presented to the user to enter a new bid (steps S1015.1 & S1015.1). The device agent 7₁ may validate the amount entered (steps S1015.3).

The device agent 7₁ sends a reply 56 to the service agency 1, which is transmitted via the access point 19₁ to the user communication module 9 (step S1016). For example, the reply message 56 can take the form:

```
   <?xml version=\"1.0\"?>
   <interactionResponse>
   <reference>57465875</reference>
   <response>2</response>
   <parameter name="Amount">12.00</parameter>
   </interactionResponse>
```

Referring again to Figure 10, the user communication module 9 can look up in the log 31 (Figure 3), the reference number and identify the service provider (step S1017). The user communication module 9 can then forward reply 56 to the service provide 3₂ (step S1018).

The use of a predefined message format, such as XML, and structure including an identifier or markup, in this case the <response> tag, and elements (or element modifier) and attributes, in this case intext and name respectively, allows the service agency 1 and/or service providers 3₁, 3₂, 3₃, 3₄ to define what parameters should be collected from the user and/or the format of the data.

Other structures using other elements such as {da:inenum}, {da:pound} and {da:lt} can be used. The structure {da:inenum} can be used to make a selection from a list. The structure {da:pound} specifies the need to show a pound ("£") sign. The structure {da:lt} specifies the need to show "<" sign.

In the examples previously described, the content of the message originates from a service provider 3₁, 3₂ and the device agent sends an acknowledgement 55 and/or reply 56 which is returned to a service provider 3₁, 3₂. However, the service agency 1 may generate messages and process acknowledgements or replies, as will now be described in more detail.

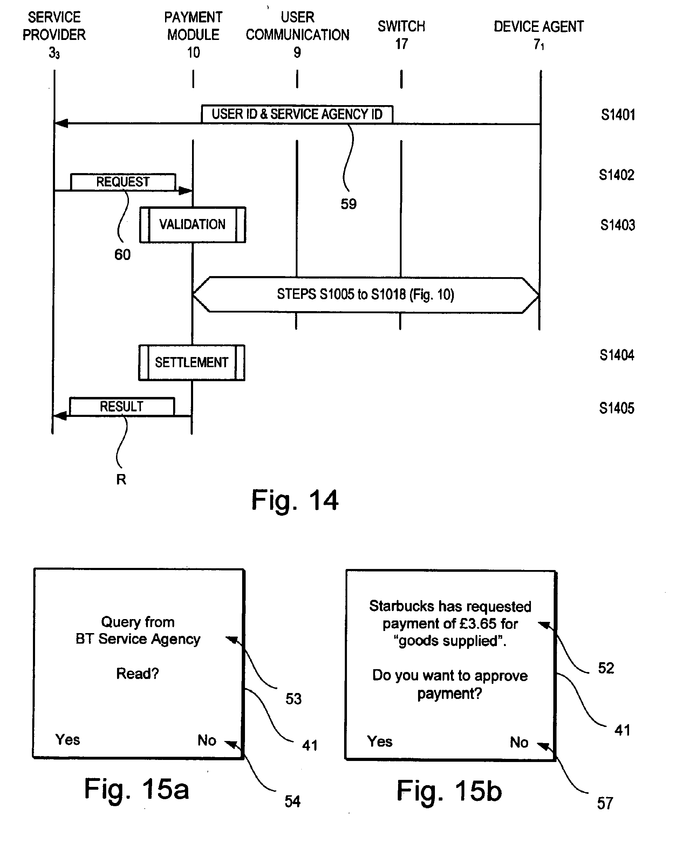

Referring to Figure 14, the user 2 visits a third service provider 3₃, such as a coffee shop or other service or retail outlet. The user 2 can pay for goods by giving their user ID and service agency ID to the service provider 3₃ (step S1401). For example, this could be done at point of sale by wirelessly transmitting the user ID and service agency ID as a message 59 via an infrared link, such as IrDA™, or a radio frequency link, such as Bluetooth^{™}. Other methods of transmission can be used. The service provider 3₃ transmits a request 60 for settlement to the payment module 10 (step S1402). The payment module 10 may validate the service provider 3₃ (step S1403).

Steps S1001 to S1016 (Figure 10) are carried out substantially as described earlier. However, the content of the message 52 differs and can take the following form:

```
   <?xml version=\"1.0\"?>
   <interaction>
   <reference>7654321</reference>
   <originator>Service Agency</originator>
   <message>Starbucks has requested payment of £3.65 for
   "goods supplied". Do you want to approve payment?</message>
   <response id="1">No</response>
   <response id="2">Yes</response>
   </interaction>
```

Referring also to Figure 15a, a notification message 53 is presented by the device agent 7₁ on the display 12 of the user device 4₁, as described earlier. The notification message 53 offers options 54 for reading the message 52. However, the acknowledgement message 55 is returned to the payment module 9 and is not sent to the service provider 3₃.

Referring also to Figure 15b, in this example, the message 52 notifies the user 2 that the service provider 3₃ has requested settlement of payment and offers options 55 for the user input for authorising or prohibiting payment.

The device agent 7₁ sends a reply message 56 to the service agency 1, which is transmitted via the access point 19₁ to the user communication module 9, as described earlier. For example, the reply message 56 can take the form:

```
   <?xml version=\"1.0\"?>
   <interactionResponse>
   <reference>7654321</reference>
   <response>1</response>
   </interactionResponse>
```

Referring also again to Figure 10, the user communication module 9 looks up the reference number and identify the origin, which in this case is the payment module 10 and forwards the reply message 59 to the service provide 3₂.

If the payment is authorised, then the payment module 10 settles the payment with the service provider 3₃ (step S1404). A result R, confirming payment (or non-payment) may be returned to the service provider 3₃ (step S1405).

A fourth service provider 3₄ may request information about the user, such as the location of the user. The user can authorise the release of information in a way similar to that described in the previous example.

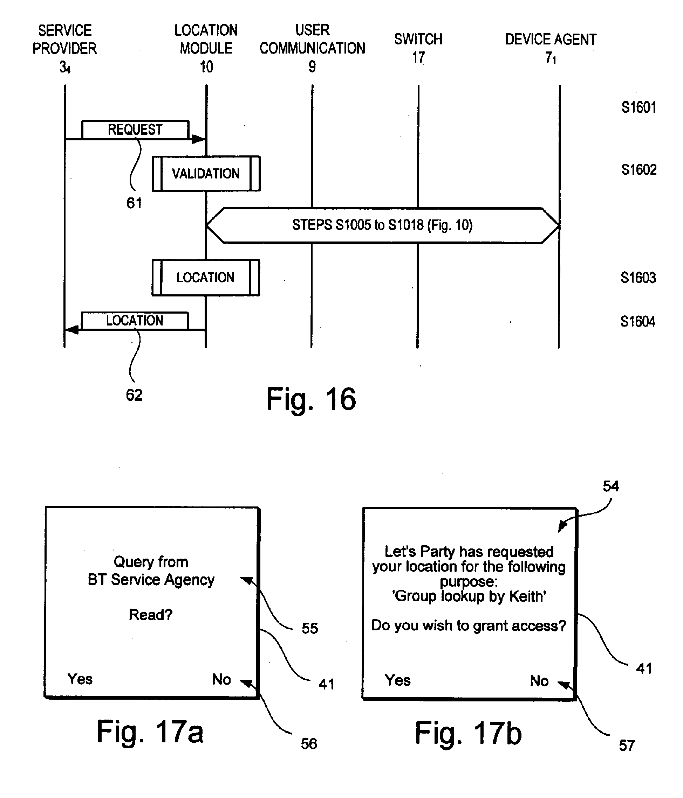

Referring to Figure 16, the service provider 3₄ sends a request 61 to the location module 11 for the location of the user 2 (step S1601). The location module 11 may validate the payment module 10 (step S1602).

Steps S1001 to S1016 (Figure 10) are carried out substantially as described earlier.

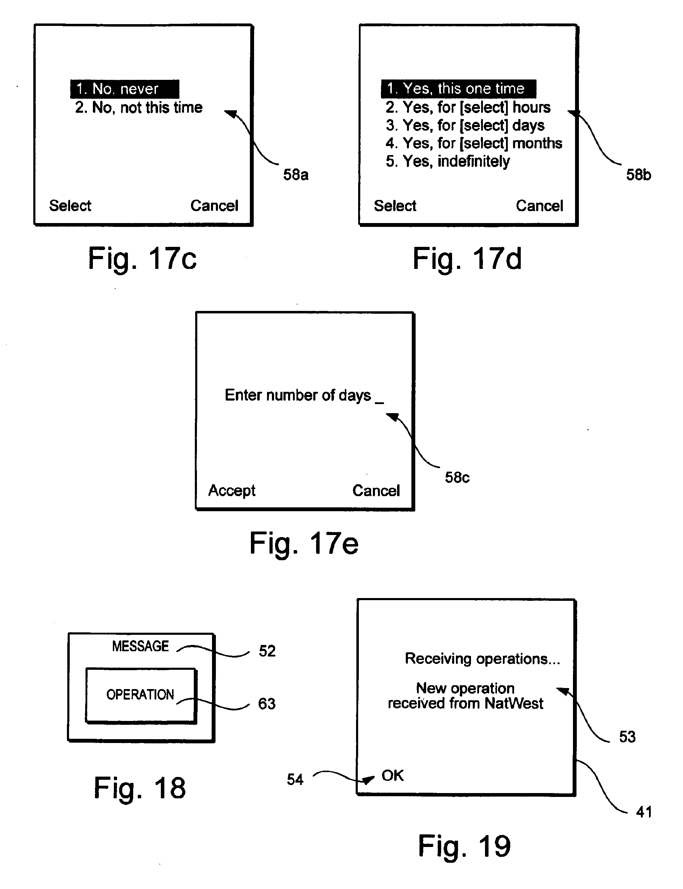

Referring to Figures 17a and 17b, the device agent 7₁ notifies the user 2 with a notification message 53 and displays the message 52, together with options 57 for authorising or prohibiting release of information.

Referring to Figures 17c to 17e, the device agent 7₁ prompts the user 2 to specify a time limit for authorising or prohibiting the release of information via a plurality of prompts 58a, 58b, 58c. The device agent 7₁ sends a reply message 56 to the service agency 1, which is transmitted via the access point 19, to the location module 11.

If the release of information is authorised, then the location module 11 determines or retrieves the location of the user 2 (step S1603) and forwards the information to the service provider 3₄ (step S1603).

Referring again to Figure 10, there may be a delay between the device agent 7₁, 7₂ receiving a message 52 and returning an acknowledgement 55 and/or a reply 56.

This can lead to problems. For example, the device agent 7₁, 7₂ may no longer be able to send the acknowledgement 55 or reply 56 because the device agent 7₁, 7₂ has been disconnected or the device 4₁, 4₂ (Figure 1) has been switched off or lost power (e.g. because a battery has run out). Alternatively, another device agent 7₁, 7₂ may have been chosen to receive notifications. For example, the user may prefer to use a new device agent 7₁, 7₂ for receiving notifications and thus may instruct the service agency 1 to promote the new device agent 7₁, 7₂, unaware that a message 52 has been sent to the previously preferred device agent 7₁, 7₂.

These problems can be addressed by the service agency 1 monitoring the status of connected device agents 7₁, 7₂ and, if a message 52 is sent to one device agent 7₁, 7₂ and if the service agent 1 detects that the device agent's status has changed (e.g. been disconnected or another device has been promoted), the message 52 can be sent to a new device agent 7₁, 7₂. The service agency 1 can retract the message 52 sent to the device agent 7₁, 7₂, for example by sending a cancellation message (not shown), and/or ignore any acknowledgement 55 or reply 56 received from it.

In the examples previously described, service provider 3₁, 3₂, 3₃, 3₄ or the service agency 1 initiates communication with the user. The service provider 3₁, 3₂, 3₃, 3₄ or the service agency 1 sends a message 52 to the user and the device agent 7₁, 7₂ returns an acknowledgement 55 or reply 56.

However, the service provider 3₁, 3₂, 3₃, 3₄ or the service agency 1 can send a message 52 with data for allowing the device agent 7₁, 7₂ to initiate future communication, as will now be described.

Referring to Figure 18, a service provider 3₁, 3₂, 3₃, 3₄ can send a device agent 7₁, 7₂ a message 52 which includes at least one operation 63 which is executable by the device agent 7₁, 7₂. The user can initiate execution of operations at a later time.

The service provider 3₁, 3₂, 3₃, 3₄ transmits a message 52 to the user substantially as hereinbefore described in steps S1001 to S1013 (Figure 10). The message 52 may take the following form:

```
   <?xml version=\"1.0\"?>
   <operation>
   <originator>NatWest</originator>
   <origRef>23887</origRef>
   <displayName>Send money</displayName>
   <description>Send money to one of your pre-configured
   accounts.</description>
   <form>Send {da:intext name='Amount'} from {da:intext
   name='Source Account' value='Current Account| Savings Account'}
   to {da:intext name='Recipient' value='Current Account|Savings
   Account|John|Lucy'}.</form>
   </operation>
```

The message 52 includes fields ({da : }) which define the form of parameters to be collected from the user 2. This provides a facility for service provides 3₁, 3₂, 3₃, 3₄ to provide the user 2 with ability to send a message spontaneously to the service provider 3₁, 3₂, 3₃, 3₄ containing data in a pre-defined format. Thus, the service provider 3₁, 3₂, 3₃, 3₄ can process the message.

The use of a pre-defined message format and a predefined identifier or markup, in this case the <form> tag, allows the service agency 1 and/or service providers 3₁, 3₂, 3₃, 3₄ to define what parameters should be collected from the user.

Referring to Figure 19 and taking the example of the mobile communication device 4₁, the device agent 7₁ notifies the user of receipt of the message 52 containing at least one operation 63. The device agent 7₁ acknowledges receipt, as described earlier. The device agent 7₁ stores the operation 63 in memory 40 (Figure 4).

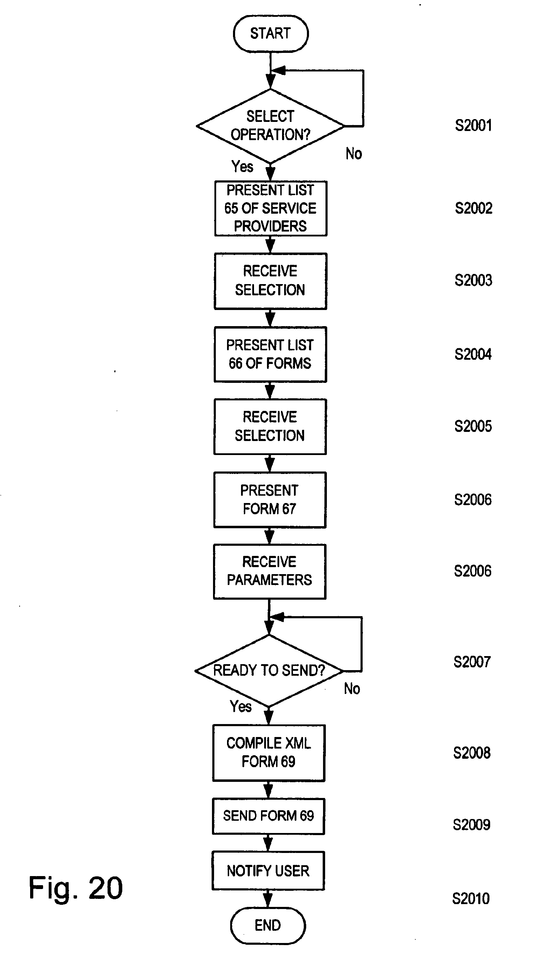

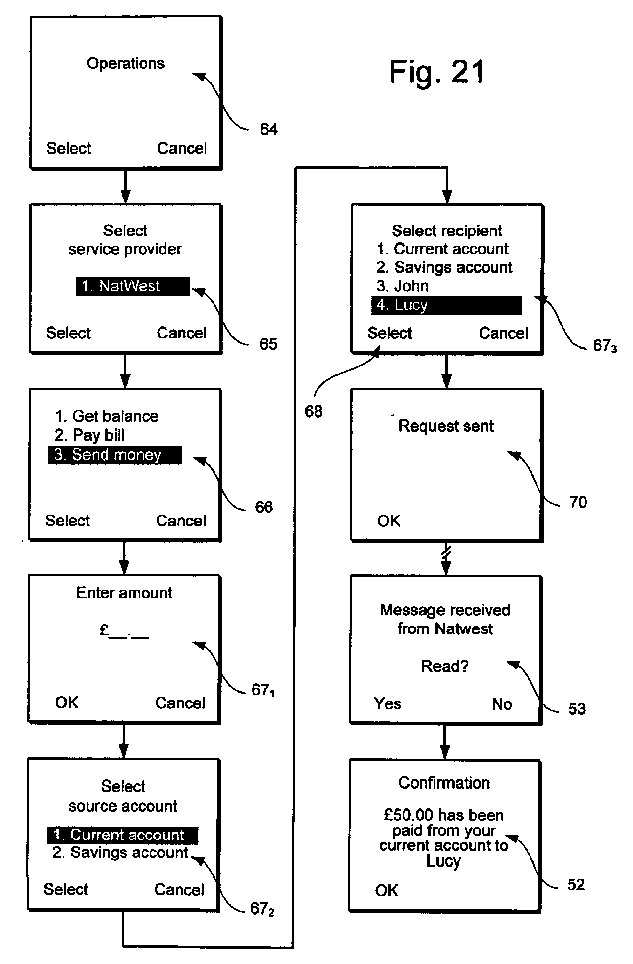

Referring to Figures 20 and 21, the user 2 navigates a menu and selects an operations option 64 (step S2001).

The device client 7₁ presents the user 2 with a list 65 of service providers for which operations are available (step S2002). The user 2 selects a service provider (step S2003) and the device client 7₁ presents the user 2 with a list 66 of forms (step S2004). The user 2 selects a form (step S2005) and the device client 7₁ presents the user 2 with the form 67 (step S2004). In this example, the device client 7₁ presents the form 67 in several parts 67₁, 67₂, 67₃.

The user inputs parameters into the form (step S2006) and selects an option 68 to send the form (step S2007). The device client 7₁ compiles the form (step S2008) and sends the compiled form 69 as a message to the service agency 1 (S2009). The compiled form 69 may take the following form:

```
   <?xml version=\"1.0\"?>
   <operationRequest>
   <originator>NatWest</originator>
   <origRef>23887</origRef>
   <parameter name="Amount">50.00</parameter>
   <parameter name="Source Account">Savings Account</parameter>
   <parameter name="Recipient">Lucy</parameter>
   </operationRequest>
```

The device client 7₁ may display a notification message 70 confirming that the message has been sent (step S2010).

The compiled form 69 is handled in substantially the same way as the reply 56 (Figure 10). The form 69 is received by the service provider or the agency 1 and may send a message 54 using steps S1001 to S1014 described earlier.

### Routing policy

Referring again to Figure 1, the user 2 may be "present", i.e. available or contactable, via more than one device 4₁, 4₂, 4₃, 4₄ at the same time. For example, the user 2 may carry a mobile communications device, such as a mobile telephone handset 4₁ or PDA 4₃, while also accessing a more powerful computing device having higher-bandwidth connectivity, such as a desktop computer 4₂ or home media centre 4₄. Therefore, service providers 3₁, 3₂, 3₃, 3₄, may be able to contact the user 2, via the service agency 1, through more than one device 4₁, 4₂, 4₃, 4₄.

As explained earlier, the service agency 1 supports delivery of service or content by providing "service elements", for example identifying and authenticating a user and providing a channel for the user to pay for services and content. The service agent 1, together with device agents 7₁, 7₂, 7₃, 7₄, provides a secure connection through which service elements can be delivered. The service elements can be delivered not only in real time, but also independently of device type and connectivity. The service agency 1 may additionally deliver service or content.

To simplify communication, the routing policy 29 (Figure 2) may specify that all messages relating to all services be routed to the device agent running on the most powerful computing device having the highest bandwidth connectivity. However, this approach is inflexible. For example, the user 2 might want to employ their media centre 4₄ to access and pay for watching television, while concurrently receiving and sending text messages via their PDA 4₃. Furthermore, the user's preferences may quickly change.

Therefore, the service agency 1 employs a routing policy 29 (Figure 2) which allows the user 2 to be present simultaneously on more than one device 4₁, 4₂, 4₃, 4₄, to control which device 4₁, 4₂, 4₃, 4₄ is used for notification of events (herein referred to as the "preferred device" or "master device") and/or to optimise the interface with the user 2, while minimising the burden on the user 2 and also offering service providers 3₁, 3₂, 3₃, 3₄ access to service elements without them needing to know on which device 4₁, 4₂, 4₃, 4₄ the user 2 is present and which device 4₁, 4₂, 4₃, 4₄ the user prefers to use.

In the following example, the computer 4₂ will be used to illustrate how the user can ascertain the status of a device 4₁, 4₂, 4₃, 4₄, particularly whether it is the preferred device for receiving notifications, and how the user can change its status or the status of another device 4₁, 4₂, 4₃, 4₄. However, it will be appreciated that the other devices 4₁, 4₃, 4₄ can operate in a substantially similar way.

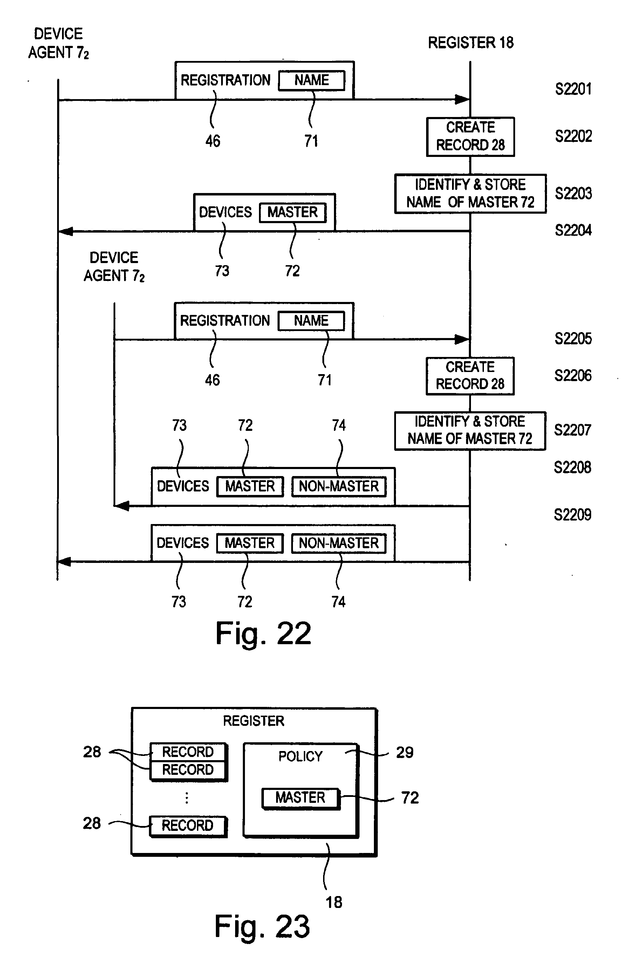

Referring to Figures 1, 22 and 23, when a device agent 7₁, 7₂, 7₃, 7₄ registers, the registration message 46 includes an instance name 71 of the device 4₁, 4₂, 4₃, 4₄ running the device agent 7₁, 7₂, 7₃, 7₄. The process shown in Figure 22 is similar to that shown in Figure 6, but includes further steps. Furthermore, in Figure 22, the device agent access point 19₁, 19₂ is omitted for clarity.

Whenever a device registers (or de-registers), the service agency 1 reviews the preferred choice of device agent 7₁, 7₂, 7₃, 7₄ and notifies all connected device agents 7₁, 7₂, 7₃, 7₄. In the following description, device agents 7₁, 7₂, 7₃, 7₄ are identified by the respective devices 4₁, 4₂, 4₃, 4₄ on which they run.

For example, the device agent 7₂ running on the personal computer 4₂ sends a registration message 46, including its name 71, for example "HomePC", to the service agency 1 (step S2201). The registration message 46 may include XML data in the following form:

```
   <?xml version="1.0"?>
   <register>
   <version>XP_J2SEv1.0</version>
   <userID> sa:mary.delaney@bt.com </userID>
   <deviceName>HomePC</deviceName>
   </register>
```

As explained earlier, the service agency 1 adds a record 28 to a list of device agents 7₁, 7₂, 7₃, 7₄ for the user 2 (only a list for one user is shown here for clarity) stored in register 18 (step S2202). The service agency 1 identifies which device agent 7₁, 7₂, 7₃, 7₄ is preferred for user interaction according to the routing policy 28 (step S2203). This may be based on the capability of each device and knowledge of the user's preferences, howsoever collected. In this case, only the device agent 7₂ running on the personal computer 4₂ is connected and so this is chosen as the preferred device. If not already stored, the name 72 of the preferred device is stored in the register 18 and a message 73 is sent to the personal computer 4₂ listing the name of the preferred device 72 (step S2204). In this case, the message 73 can take the following form:

```
   <?xml version="1.0"?>
   <devices><device status="master">HomePC</device></devices>
```

The device agent 7₃ running on the PDA 4₃ sends a registration message 46 including its name 71, e.g. "PDA", to the service agency 1 (step S2205). The service agency 1 adds the device agent 7₃ to the list of device agents (step S2206) and reviews which device agent 7₁, 7₂, 7₃, 7₄ is preferred (step S2207). According to the routing policy 28, the service agency 1 finds that PDA is the (new) preferred device.

The name 72 of the preferred device is updated in the register 18. The names of the non-preferred device may also be stored. A new message 73 is sent to the computer 4₂ (step S2208) and to the PDA 4₃ (step S2209) listing the name 72 of the preferred device and the name 74 of the non-preferred device. In this case, the message 73 can take the following form:

```
   <?xml version="1.0"?>
   <devices><device status="master">PDA</device><device
   status="non-master">HomePC</device></devices>
```

Thus, each connected device agent 7₂, 7₃ knows its status and the status of other connected device agents 7₂, 7₃.

Each device agent 7₂, 7₃ can indicate its status to the user 2 via a graphical user interface or other form of user interface or indicator. This can allow the user 2 to instruct the service agency 1 to override the choice of preferred device and promote a device to the status of preferred device.

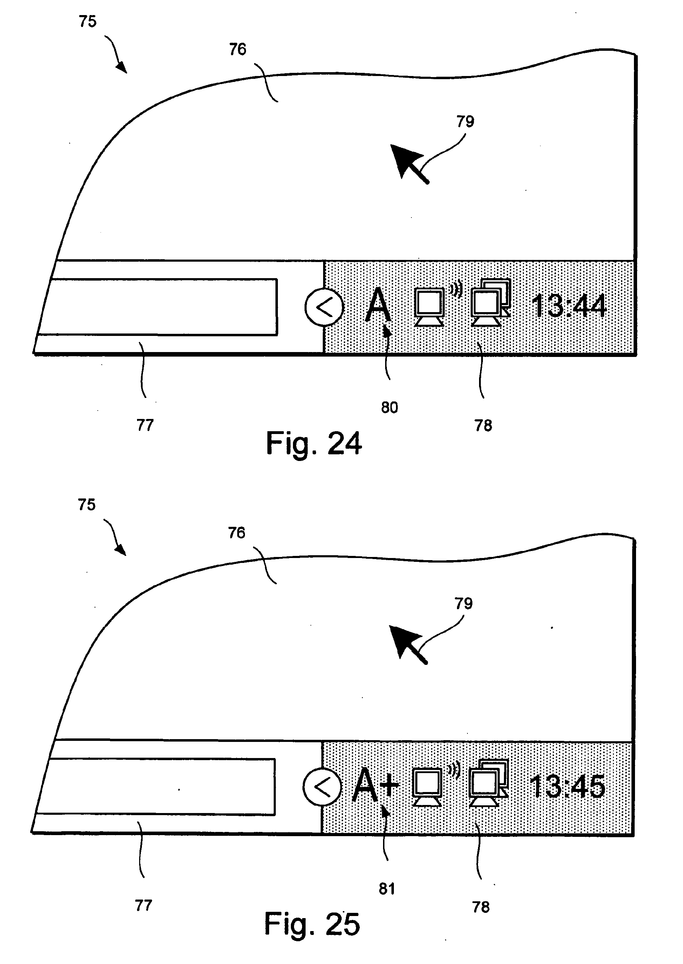

Referring still to Figure 1 and also to Figure 24, a portion 75 of a display of a device, in this case the display of the computer 4₂, is shown. In this example, the computer 4₂ is running a Microsoft^{™} Windows operating system. However, other operating systems providing a graphical user interface may be used. The display portion 75 includes part of a desktop 76 or window, a task bar 77, a system tray 78 and a pointer 79.

The system tray 78 (which sometimes referred to as a "notification area") includes a device agent icon 80, in this case in the form of a letter "A", or other indicator which indicates that a device agent 7₂ is running on the computer 4₂ and is connected to the service agency 1.

Referring also to Figure 25, if the device agent 4₂ is the preferred device agent, then a preferred device agent icon 81 is displayed, in this case in the form of an "A+", which indicates that the computer 4₂ is the preferred device for receiving notifications.

For this form of graphical user interface, the icons 80, 81 are selectable by the user and thus allow the user to instruct the device agent 7₂ and the service agency 1 selecting the icon 80, 81.

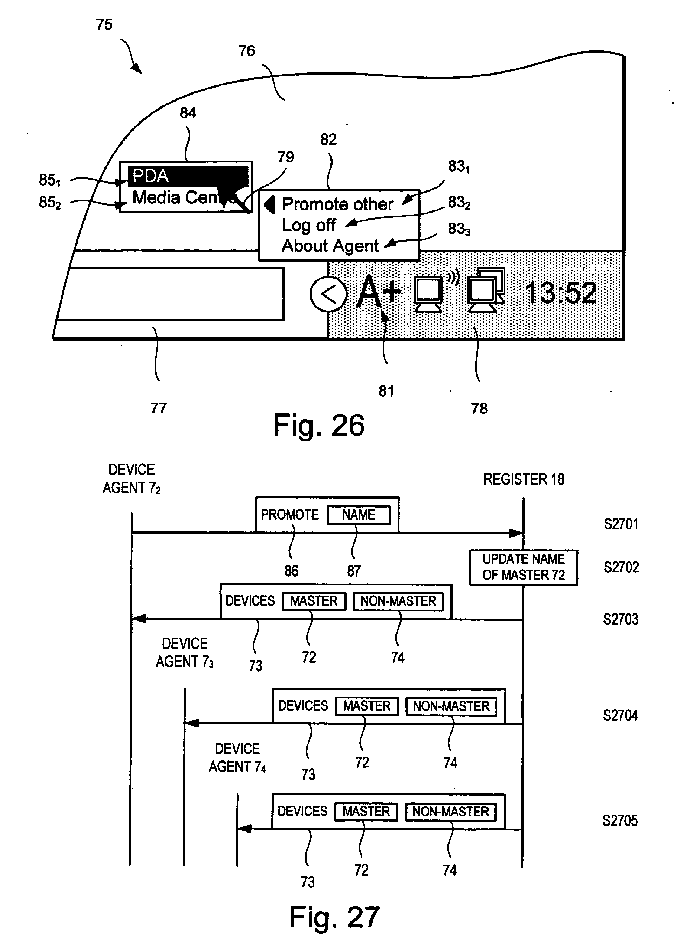

Referring still to Figure 1 and also to Figure 26, the user 2 can select the icon 81 by positioning the pointer 78 over the icon 80 and activating selection, for example by clicking a left button (not shown) on a mouse (not shown). Selection of the icon 81 causes the computer 4₂ to display a first menu 82 (sometimes referred to as a "drop-down menu") which includes a list of actions 83₁, 83₁, 83₃. In this example, the actions include a first instruction 83₁ to the service agency 1 to promote another device agent, a second instruction 83₂ to a device agent 7₁, 7₂, 7₃, 7₄ to log off from the service agency 1 and a third instruction 83₃ to the device agent 7₂ to display information about itself.

The user 2 can select the first instruction 83₁ by positioning the pointer 79 over the instruction 83₁. Selection of the first instruction 83₁ causes the computer 4₂ to display a second menu 83 listing names 84₁, 84₂ of other devices 4₃, 4₄ running device agents 7₃, 7₄ connected to the service agency 1. In this example, two other devices 4₃, 4₄ are listed, namely the PDA 4₃ and the media centre 4₄.

The user 2 can select a device 4₃, 4₄ by positioning the pointer 79 over the name 85₁, 85₂ of one of the devices 4₃, 4₄ and activating selection, for example by clicking a left button (not shown) on a mouse (not shown). In this example, the user 2 selects PDA 4₃.

Referring also to Figure 27, selection of the name 85₁ of the device 4₃ causes the device agent 4₂ to send an instruction 86 to the register 18 to promote the device 4₃ to the status of preferred device (step S2701). The instruction 86 includes information 87 identifying the device 4₃. The instruction 86 can take the following form:

```
   <?xml version="1.0"?>
   <promote device="PDA"></promote>
```

The name 72 of the preferred device is updated in the register 18 (step S2702). If also stored, the names of non-preferred devices may also be updated. A new message 73 is sent to all connected devices 4₂, 4₃, 4₄ (steps S2203 to S2205) listing the name 72 of the preferred device and the names 75 of the non-preferred devices.

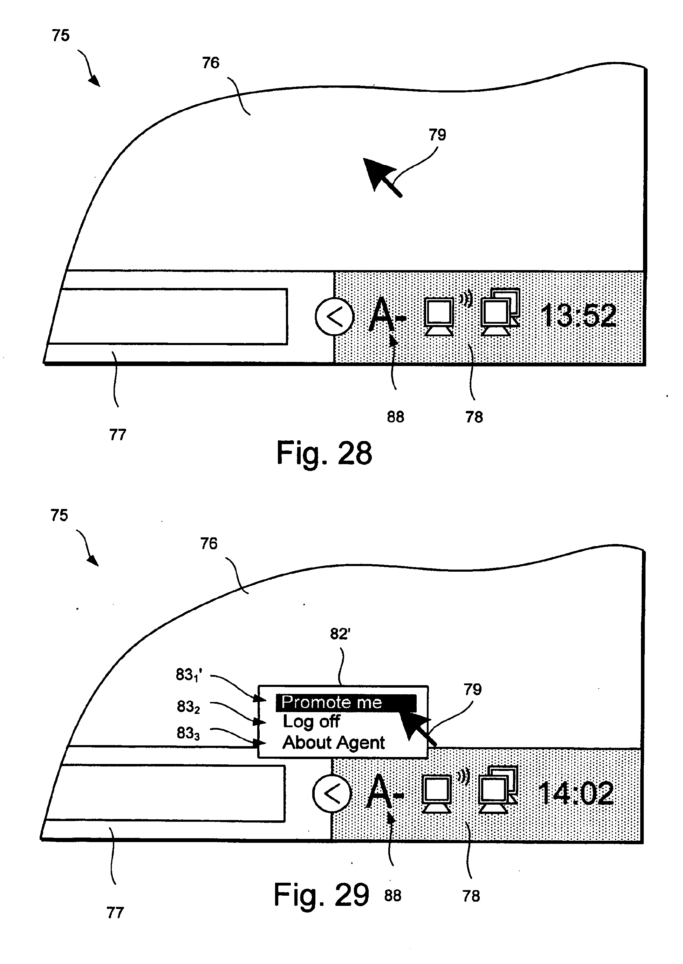

Referring still to Figure 1 and also to Figure 28, the computer 4₂ is no longer the preferred device and so a non-preferred device agent icon 88 is displayed, in this case in the form of an "A-". Thus, the service agency 1 will send notifications for user interaction to the preferred device, which is now PDA 4₃.

Notwithstanding this, the service agency 1 still sends messages 52 (Figure 18) containing operation(s) 63 (Figure 18) to any connected device 4₂, 4₃, 4₄ regardless of whether the device 4₂, 4₃, 4₄ is preferred or not. This allows the user 2 to initiate up-to-date operations using any connected device 4₂, 4₃, 4₄. For example, the user can initiate an operation via their media centre 4₄ to pay for a service, such as pay television.

Thus, the register 18 can return the name of one or more device agents 7₁, 7₂, 7₃, 7₄ to the switch 17 when a message 52 (Figure 9) is received from a service provider 3₁, 3₂, 3₃, 3₄ dependent on the type of message. The type of message can be determined by identifying tags within the message 52 (Figure 9), such as <operation>...</operation>.

Referring still to Figure 1 and also to Figure 29, the user 2 can elevate the computer 4₂ to the status of preferred device by selecting the non-preferred device agent icon 88 and selecting, from a menu 82', an instruction 85₁' to the service agency 1 (Figure 1) to promote the computer 4₂. In response, the device agent 4₂ sends an instruction 86 to the register 18 to promote the computer 4₂, in a similar way to that described earlier. Once the device agent 7₂ receives confirmation from the service agency 1 that it is the new preferred device agent, then the computer 4₂ updates the non-preferred device agent icon 88 to the preferred device agent icon 82, as shown in Figure 24.

As mentioned earlier, the user 2 can log off any device 4₂, 4₃, 4₄ currently connected to the service agency 1 using any connected device 4₂, 4₃, 4₄.

The device 4₂, 4₃, 4₄ to be logged off can be the device that the user is currently using, in this case computer 4₂, or a different device, such as the PDA 4₃ or media centre 4₄. Furthermore, the device 4₂, 4₃, 4₄ to be logged off can be the preferred device for receiving notifications or a non-preferred device. If a preferred device is logged off, then a new preferred device is selected by the service agency 1.

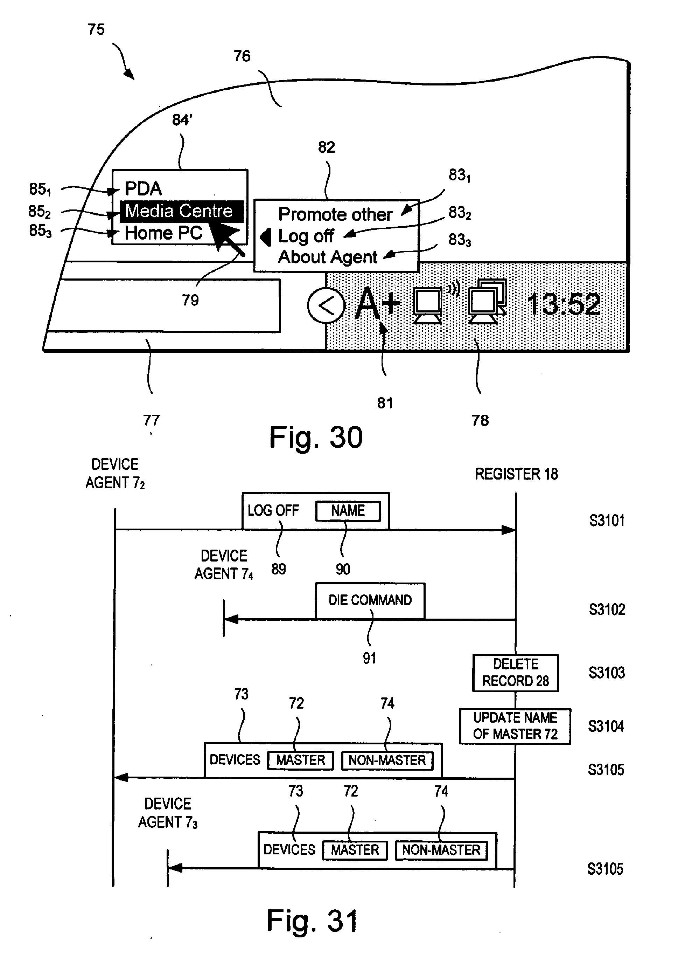

Referring still to Figure 1 and also to Figure 30, in this case the computer 4₂ is the preferred device and so a preferred device icon 88 is displayed. The user 2 selects the second instruction 83₂ to log off from the first menu 82. Selection of the second instruction 83₂ causes the computer 4₂ to display a menu 84' listing names 85₁, 85₂, 85₃ of all devices 4₂, 4₃, 4₄ running device agents 7₂, 7₃, 7₄ and which are connected to the service agency 1. In this example, three devices 4₂, 4₃, 4₄ are listed, namely the computer 4₂, PDA 4₃ and the media centre 4₄.

The user 2 can select a device 4₂, 4₃, 4₄ by positioning the pointer 79 over the name 85₁, 85₂, 85₃ of one of the devices 4₂, 4₃, 4₄ and activating selection. In this example, the user selects media centre 4₄.

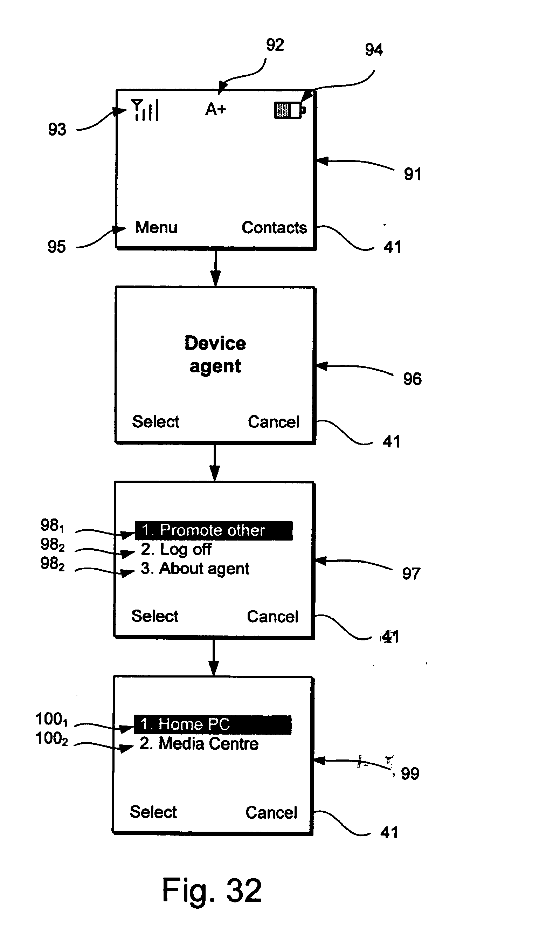

Referring also to Figure 31, selection of the name 85₄ of the device 4₂, 4₃, 4₄ causes the device agent 7₂ to send an instruction 89 to the register 18 to log off a specified device 90 (step S3101). For example, the instruction 89 can take the following form:

```
   <?xml version="1.0"?>
   <logOff device="Media Centre"></logOff>
```

If the device to be logged off is a device other than the one sending the instruction 89, then the service agency 1 sends a command 90 to the corresponding device agent 7₄ to disconnect itself (or to be informed of its disconnection) from the service agency 1 (step S3102). The service agency 1 removes the record 28 for the logged off device from the register 18 (step S3103). If the device was the preferred device, identifies a new preferred device (step S3104). In this example, the new preferred device 4₂, 4₃, 4₄ is selected according to the routing policy 29 (Figure 2). However, the device 4₂ sending the instruction 89 may be selected to be the new preferred device. Alternatively, the new preferred device may be selected by prompting the user 2 to promote one of the remaining connected device 4₂, 4₃, 4₄. The service agency 1 sends a message 73 to the remaining devices 4₂, 4₃ (step S3105 & S3106) listing the name 72 of the preferred device and the name 75 of the non-preferred device.

Different icons or other forms of indicator may be used to indicate status of a device agent 7₁, 7₂, 7₃, 7₄ to the user 2. For example, in the case of the computer 4₂ and other devices having similar forms of graphical user interface, a window (not shown) may display the status of the device agent 7₂, 7₃, 7₄ to the user 2. Additionally or alternatively, light emitting elements (not shown), such as light emitting diodes, can be used. For example, different colours or blink patterns may be used to indicate different levels of status. The use of light emitting elements (not shown) may be useful for the mobile telephone handset 4₁ (Figure 1) or other devices having smaller displays.

If a device has a display but a limited (or different) form of user input device, such as a keypad and/or joystick, then instructions can be supplied using keys or buttons to navigate a page-based menu, as will now be described using a mobile telephone handset 4₁ (Figure 1) as an example.

Referring to Figures 1 and 32, the idle state screen 91 shown on the display 41 of the mobile telephone handset 4₁ includes a device agent icon 92 and other icons, such as signal strength indicator 93 and battery power indicator 94.

The user 2 enters a menu (not shown) by pressing a soft key (not shown) located under a "Menu" option 95 and navigates through the menu (not shown) until they reach a device agent menu screen 96.

If the user 2 selects the device agent menu, for example by pressing the appropriate soft key (not shown), then the handset 4₁ displays a menu 97 including options such as a first instruction 98₁ to the service agency 1 to promote another device agent, a second instruction 98₂ to a device agent 7₁, 7₂, 7₃, 7₄ to log off from the service agency 1 and a third instruction 98₃ to the device agent 7₂ to display information about itself.

If the user 2 selects the first instruction 98₁, for example by pressing the appropriate soft key (not shown) or the "1" key on the keypad 42 (Figure 5), then the handset 4₁ displays a menu 99 listing names 100₁, 100₂ of other devices 4₃, 4₄ running device agents 7₃, 7₄ connected to the service agency 1.

The user 2 can select a device, for example by pressing the appropriate soft key (not shown) or the "1" key on the keypad 42 (Figure 5). Selection of a name 100, of the device to be promoted causes the device agent 4₁ to send an instruction 86 (Figure 27) to the register 18 to promote a device, as described earlier.

Using such a page-based menu such as that just described, the handset 4₁ can also be used to promote the handset 4₁ to the status of preferred device and to log off devices using menus similar to those described earlier.

It will be appreciated that many modifications may be made to the embodiments hereinbefore described. For example, the messages need not be XML. The device agent can be configured to render messages in other forms, such as synthesised speech. The device agent can be configured to receive user input in other ways, for example via a touch screen or voice command. Instead of a name of a device, e.g. device = "PDA", devices may be identified using a device ID, for example in the form of numeric or alphanumeric code. However, the device agent may translate the device ID into a user-defined alias or identifier, such as "My PDA", for presenting to the user.

## Claims

1. Apparatus for delivering a message to a user, the apparatus comprising means for communicating with service providers and means for communicating with device agents operating on respective user devices, wherein the service provider communicating means is configured to receive a request to communicate with a specified user and to selectively output a message for the user to the device agent communicating means and wherein the device agent communicating means is configured to maintain a list of device agents connected thereto, to receive information, from one of said connected device agents, for identifying a preferred device agent for sending a message to the user, to store information for identifying the preferred device agent and to transmit the message to the preferred device agent.

2. Apparatus according to claim 1, wherein the information identifies said one of said connected device agents as the preferred device agent.

3. Apparatus according to claim 1, wherein the information identifies another one of said connected device agents as the preferred device agent.

4. Apparatus according to any one of claims 1 to 3, configured to receive an instruction from a first connected device agent to disconnect a second connected device agent and to disconnect said second connected device agent from the device agent communicating means.

5. Apparatus according to any one of claims 1 to 3, configured to receive information from a first connected device agent identifying a second connected device agent to be disconnected from the device agent communicating means.

6. Apparatus according to claim 5, further configured to send an instruction to the second connected device agent to disconnect from the device agent communicating means.

7. Apparatus according to any one of claims 4 to 6, wherein the first and second connected devices are the same.

8. Apparatus according to any preceding claim, wherein the device agent communicating means is configured to determine a type of the message and, in dependence upon the message type, to transmit the message to a device agent other than the preferred device agent.

9. Apparatus according to claim 8, wherein the device agent communicating means is configured, in dependence upon the message type, to transmit the message to all connected device agents.

10. A device for receiving a message from a message delivery apparatus, the device comprising a device agent for communicating with the message delivery apparatus, the device agent configured to receive, from the message delivery system, a list of device agents which are connected to the message delivery system and are associated with a user, the device agent further configured to receive information, from the user, for identifying a preferred device agent for receiving messages and to send information for identifying the preferred device agent to the message delivery apparatus.

11. A device according to claim 10, wherein the information identifies the said device agent as the preferred device agent.

12. A device according to claim 10, wherein the information identifies another device agent as the preferred device agent.

13. A device according to any one of claims 10 to 12, configured to send information, to the message delivery apparatus, for identifying a device agent to be disconnected.

14. A device according to claim 13, wherein the information identifies the said device agent as the device agent to be disconnected.

15. A device according to claim 13, wherein the information identifies another device agent as the device agent to be disconnected.

16. A device according to any one of claims 10 to 15, comprising indicating means, said device configured to indicate to the user via said indicating means whether the device agent is connected to the message delivery system, when the device is connected.

17. A device according to claim 16, configured to indicate to the user that the device agent is the preferred device agent for receiving messages from the message delivery system, when the device is the preferred device.

18. A device according to claim 16 or 17, configured to indicate to the user that another device agent is the preferred device agent for receiving messages from the message delivery system, when another device is preferred.

19. A device according to any one of claims 16 to 18, wherein said indicating means is a display.

20. A device according to any one of claims 16 to 19, comprising input means, the device configured to receive an instruction via said input means to select one of the device agents as the preferred device agent and to send information for identifying the preferred device to the message delivery apparatus.

21. A device according to any one of claims 16 to 20, comprising input means, the device configured to receive an instruction via said input means to select one of the device agents to be disconnected and to send information for identifying the device to the message delivery apparatus.

22. A device according to claim 20 or 21, configured to provide a graphical user interface, to display the list of the device agents via said graphical user interface and to allow said user to select one of the device agents using said input means.

23. A system comprising:
a message delivery apparatus according to any one of claims 1 to 9;
at least two devices, each device according to any one of claims 10 to 22; and
at least one service provider,
said at least one service provider configured to transmit a request to the message delivery apparatus, the message delivery apparatus configured to determine whether to send a message to the user, to receive information from a device agent operating on a device for identifying a preferred device agent, to store information for identifying the preferred device agent and to transmit the message to the preferred device agent.

24. Apparatus for delivering a message to a user, the apparatus comprising:
a module for communicating with service providers; and
a module for communicating with device agents operating on respective user devices, wherein the service provider module is configured to receive a request to communicate with a specified user and to selectively output a message for the user to said device agent communicating module and wherein the device agent communicating module is configured to maintain a list of device agents connected thereto, to receive information from one of said connected device agents for identifying a preferred device agents, to store information for identifying the preferred device agent and to transmit the message to the preferred device agent.

25. A method of delivering a message to a user, the method comprising:
maintaining a list of device agents connected to a message delivery apparatus;
receiving information, from one of said connected device agents, for identifying a preferred device agent;
storing said information for identifying the preferred device agent;
receiving a request to communicate with a specified user;
selectively outputting, in response to receiving the request, a message for the user; and
transmitting said message to the preferred device agent.

26. A method of operating a device for receiving a message from a message delivery apparatus, the method comprising:
receiving, from the message delivery system, a list of device agents connected to the message delivery system and which are associated with a user,
receiving information, from the user, for identifying a preferred device agent for receiving messages;
transmitting information for identifying the preferred device agent to the message delivery apparatus.

27. A computer program which, when executed on data processing apparatus, causes said data processing apparatus to perform a method according to claim 25 or 26.

28. A computer readable medium storing a computer program according to claim 27.
